# EUROPEAN PATENT APPLICATION

(11) **EP 1 845 291 A1**
(43) Date of publication of application: **17.10.2007**
(21) Application number: 06712361.2
(22) Date of filing: 26.01.2006
(51) Int. Cl.: F16J 15/32, G01P 3/487

(54) **HERMETICALLY SEALING DEVICE WITH MAGNETIC ENCODER**

(30) Priority: 31.01.2005 JP 2005023230
(71) Applicant: NOK Corporation, Minato-ku Tokyo 105-8585 (JP)
(72) Inventor: YARIMIZU, Kenichi, , Fukushima-shi, Fukushima 9601102 (JP); NAGASAWA, Shinji, , Fukushima-shi, Fukushima 9601102 (JP); KOBAYASHI, Naoto, , Fukushima-shi, Fukushima 9601102 (JP)
(74) Representative: Leson, Thomas Johannes Alois
(86) International application number: PCT/JP2006/301179
(87) International publication number: WO 2006/080370

(57) **Abstract**

A hermetically sealing device with a magnetic encoder in which the fixing space is reduced in the axial direction when a sealing body (10) and the magnetic encoder (11) are fixed in an annular space formed between members (2, 4) movable relatively. The hermetically sealing device comprises a magnetic sensor (60) fixed to a stationary side member (3) attached to a housing (2), a magnetic encoder (50) having a holder (51) fixed to a rotary shaft (4) and an encoder body (56) magnetized in the circumferential direction at predetermined pitches, coupled with the cylindrical portion (52) of the holder (51), and opposed to the magnetic sensor (60) in the radial direction, and a sealing body (10) provided with a core metal (20) where a cylindrical portion (22) extending in the axial direction from a flange portion (21) clamped by the housing (2) and the stationary side member (3) is close to the cylindrical portion (52) of the holder (51) and a lip portion (40) hermetically sealing the circumferential surface of the rotary shaft (4).

## Description

### BACKGROUND OF THE INVENTION

### Field of the Invention

The present invention relates to a structure of a hermetically sealing device sealing an annular space formed between two members which are relatively movable with each other. More particularly, the present invention relates to a hermetically sealing device provided with a magnetic encoder device and having a function of detecting rotating speeds of front and rear wheels in a crank angle detecting system and an automotive antilock brake system.

### Description of the Conventional Art

Conventionally, as shown in the following patent document, there has been proposed a structure for installing a magnetic encoder device constituted by a magnetic encoder and a magnetic sensor for detecting a rotating speed, to a seal main body sealing an annular space formed between two members which are relatively movable with each other.

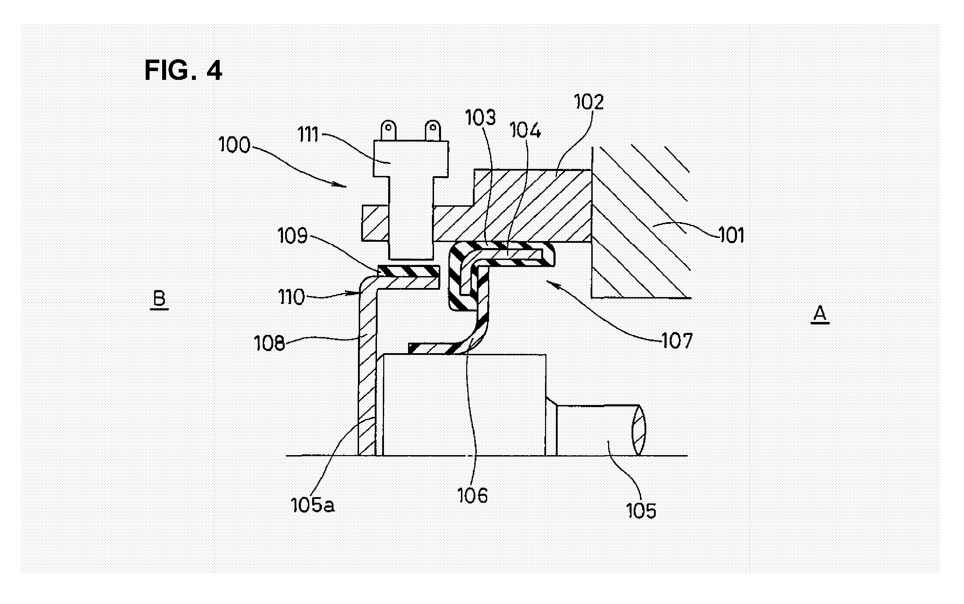

A hermetically sealing device 100 with a magnetic encoder device shown in Fig. 4 is structured by installing a magnetic encoder 110 having an encoder main body 109 coupled to a holder 108 and serving as a pulse generator to a shaft end portion 105a of a rotating shaft 105 in an atmospheric air side B of a seal main body 107 having a core metal 104 fitted to a stationary side member 102 assembled in a housing 101 via a fixed sealing portion 103, and a synthetic resin lip portion 106 slidably sealing a peripheral surface of the rotating shaft 105 and coupled to the core metal 104 via the fixed sealing portion 103, and installing a magnetic sensor 111 reading a pulse signal to the stationary side member 102 in such a manner as to face to the encoder main body 109 in a radial direction.

However, in the hermetically sealing device 100 with the magnetic encoder device having the structure mentioned above, since the seal main body 107, and the magnetic encoder device constituted by the magnetic encoder 110 and the magnetic sensor 111 are arranged in parallel in an axial direction and are installed to the stationary side member 102, there is a problem that a mounting space is expanded in an axial direction.

Patent Document 1: Japanese Unexamined Patent Publication No. 2004-93554

Patent Document 2: Japanese Patent No. 3043013

### SUMMARY OF THE INVENITON

### Problems to be solved by the Invention

The present invention is made by taking the points mentioned above into consideration, and an object of the present invention is to reduce a mounting space in an axial direction in the case of installing a seal main body and a magnetic encoder device to an annular space formed between relatively movable members.

### Means for Solving the Problems

In order to achieve the object mentioned above, in accordance with a first aspect of the present invention, there is provided a hermetically sealing device with a magnetic encoder device comprising:
a magnetic sensor installed to a stationary side member assembled in a housing;
a magnetic encoder provided with a holder, which is installed in such a manner as to integrally rotate with a rotating shaft passing through along an inner peripheries of the housing and the stationary side member, and an encoder main body, which is magnetized at a predetermined pitch in a circumferential direction, faces to the magnetic sensor in a radial direction and is connected to a cylinder portion of the holder; and
a seal main body provided with a core metal, in which a cylinder portion extending in an axial direction from a flange portion clamped between the housing and the stationary side member is close to the cylinder portion of the holder, and a lip portion slidably sealing the circumferential surface of the rotating shaft.

The present invention achieves the following effect.

In accordance with the hermetically sealing device with the magnetic encoder device on the basis of the present invention provided with the structure mentioned above, since the core metal of the seal main body is clamped between the housing and the stationary side member, it is possible to install the encoder main body of the magnetic encoder in an overlapping state in the radial direction at the outer peripheral side of the lip portion of the seal main body, it is not necessary to install the seal main body and the magnetic encoder device in parallel in the axial direction. Further, since the cylinder portion of the core metal is close to the cylinder portion of the holder of the magnetic encoder, it is possible to reduce the mounting space in the axial direction without enlarging in the radial direction.

### BRIEF EXPLANATION OF DRAWINGS

Fig. 1 is a cross sectional view of a first embodiment in accordance with the present invention;
Fig. 2 is a cross sectional view of a second embodiment in accordance with the present invention;
Fig. 3 is a cross sectional view of a third embodiment in accordance with the present invention; and
Fig. 4 is a cross sectional view of a conventional art.

### Description of Reference Numerals

- 1: hermetically sealing device with magnetic encoder device
- 2: cylinder block (housing)
- 3: retainer (stationary side member)
- 3A: concave portion
- 4: rotating shaft
- 4A: rotating shaft end portion
- 10: seal main body
- 11: magnetic encoder device
- 20: core metal
- 21, 23, 53, 54, 55: flange portion
- 22, 24,: 52 cylinder portion
- 30, 31,: 36fixed sealing portion
- 32, 33: convex portion
- 40: lip portion
- 41: fixed portion
- 46: seal lip
- 50: magnetic encoder
- 51: holder
- 56: encoder main body
- 60: magnetic sensor
- A: crank chamber side
- B: atmospheric air side

### DETAILED DESCRIPTION OF PREFERRED EMBODIMENT

A description will be given below of a preferable embodiment in accordance with the present invention on the basis of an exemplification with reference to the accompanying drawings. In this case, the scope of the invention can not be limited to the contents described in this embodiment unless a particularly limitative description is given.

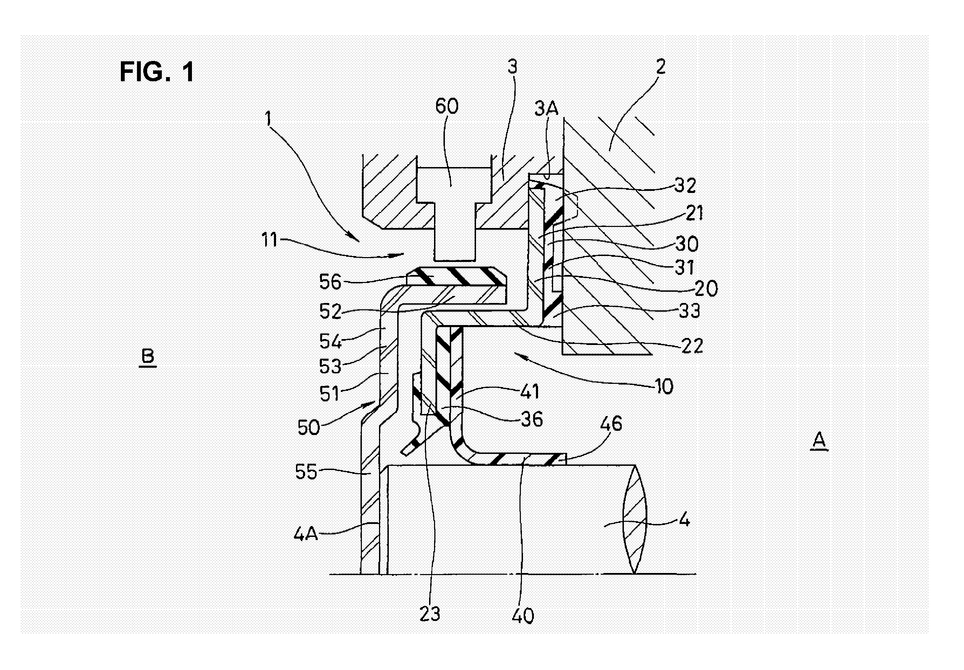

Fig. 1 is a cross sectional view of a hermetically sealing device with a magnetic encoder device in accordance with a first embodiment in accordance with the present invention.

As shown in Fig. 1, a hermetically sealing device with a magnetic encoder device 1 is provided with a seal main body 10 and a magnetic encoder device 11, and the magnetic encoder device 11 is provided with a magnetic encoder 50 and a magnetic sensor 60.

The seal main body 10 is installed in such a manner as to slidably seal an annular space formed by a cylinder block 2 corresponding to a housing, a retainer 3 corresponding to a stationary side member assembled in the cylinder block, and a rotating shaft 4 passing through along inner peripheries of the cylinder block 2 and the retainer 3.

The seal main body 10 is constituted by a core metal 20, a fixed sealing portion 30 and a lip portion 40. The core metal 20 is a metal ring constituted by a first flange portion 21, a first cylinder portion 22 bent perpendicularly from an inner peripheral side end portion of the first flange portion 21 so as to extend horizontally to an atmospheric air side in an axial direction, and a second flange portion 23 bent perpendicularly from the atmospheric air side end portion of the first cylinder portion 22 so as to extend vertically in an inner peripheral direction, which are integrally molded in accordance with a sheet metal press molding.

A fixed sealing portion 30 is constituted by a rubber-like elastic body, and there are independently molded a first fixed sealing portion 31 adhered to the first flange portion 21, and a second fixed sealing portion 36 adhered to the second flange portion 23. The first fixed sealing portion 31 adheres to an outer peripheral side end surface and a crank chamber side surface of the first flange portion 21 of the core metal 20 in such a manner as to cover, and a first convex portion 32 and a second convex portion 33 at an outer peripheral side are formed in a portion covering the crank chamber side surface. The first convex portion 32 is clamped by the crank chamber side surface of the first flange portion 21 of the core metal 20 and an atmospheric air side end surface of the cylinder block 2 so as to be compressed in the axial direction within a concave portion 3A formed in the retainer 3 at a time of installing the seal main body 10, and the core metal 20 is clamped by the cylinder block 2 and the retainer 3. Further, the second fixed sealing portion 36 adheres to an inner peripheral side end portion of the second flange portion 23 in such a manner as to cover it.

In the lip portion 40, there are integrally molded by a resin a fixed portion 41 adhered to a crank chamber side end surface of the second fixed sealing portion 36, and a seal lip 46 extending toward the crank chamber side from the end portion in the inner peripheral direction of the fixed portion 41 so as to be brought into slidable contact with a circumferential surface of the rotating shaft 4, and an outer peripheral side end surface of the fixed portion 41 is brought into contact with an inner peripheral side surface of the first cylinder portion 22 of the core metal 20.

The magnetic encoder 50 is constituted by a holder 51 and an encoder main body 56. The holder 51 is a metal ring obtained by integrally molding a cylinder portion 52 which is close in a parallel state to an outer peripheral side of the first cylinder portion 22 of the core metal 20 of the seal main body 10 so as to extend horizontally, and a flange portion 53 extending in an inner peripheral direction from an atmospheric air side end portion of the cylinder portion 52 in accordance with a sheet metal press molding. The flange portion 53 is constituted by an outer peripheral side flange portion 54 and an inner peripheral side flange portion 55 by a step existing in a middle portion, and is structured such that a crank chamber side surface of the inner peripheral side flange portion 55 is coupled to the atmospheric air side end portion 4A of the rotating shaft 4. The encoder main body 56 is integrally provided on an outer peripheral surface of the cylinder portion 52 of the holder 51, and is formed as a cylindrical multipolar magnet, for example, made of a synthetic resin or a rubber material mixed with a magnetic powder such as a ferrite powder or the like, or a ferromagnetic metal, with N poles and S poles being magnetized alternately at a predetermined pitch in a circumferential direction.

The magnetic sensor 60 is installed to the retainer 3 assembled in the cylinder block 2 in such a manner as to face to an outer peripheral side of the encoder main body 56 of the magnetic encoder 50 in a radial direction.

In accordance with the structure mentioned above, since the core metal 20 of the seal main body 10 is clamped by the cylinder block 2 and the retainer 3 in a state of being adhered to the fixed sealing portion 30, the core metal 20 is not interposed between the encoder main body 56 and the magnetic sensor 60 even when the encoder main body 56 of the magnetic encoder 50 is extended to the outer peripheral side of the first cylinder portion 22 of the core metal 20 in the seal main body 10. Accordingly, it is possible to install the seal main body 10 and the magnetic encoder device 11 in a state of overlapping in the radial direction. Further, since the first cylinder portion 22 of the core metal 20 is parallelly close to the cylinder portion 52 of the magnetic encoder 50 so as to extend horizontally, it is possible to reduce an installing space in the axial direction without enlarging in the radial direction.

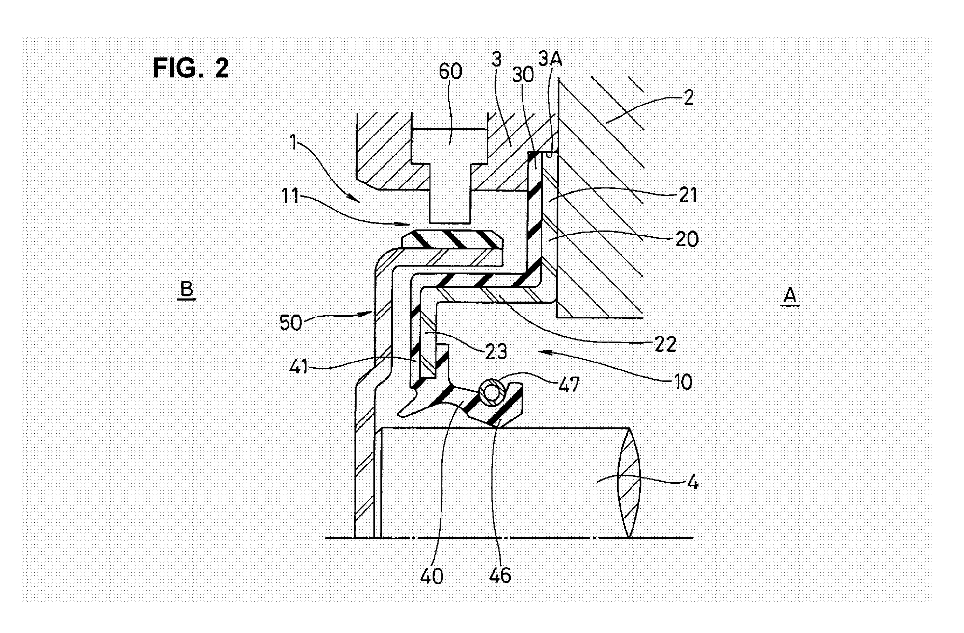

Fig. 2 is a cross sectional view of a hermetically sealing device with a magnetic encoder device in accordance with a second embodiment of the present invention, and a description will be given of different points from the first embodiment.

In the hermetically sealing device 1 with the magnetic encoder device in accordance with the second embodiment, the fixed sealing portion 30 of the rubber-like elastic body adheres to the atmospheric air side surface of the first flange portion 21 of the core metal 20 in the seal main body 10, the outer peripheral side surface of the first cylinder portion 22, and the atmospheric air side surface of the second flange portion 23 in such a manner as to cover them, and an inner peripheral side end portion is provided with a lip portion 40 of a rubber-like elastic body integrally molded with the fixed sealing portion 30. The first flange portion 21 adhered to the fixed sealing portion 30 is inserted into the concave portion 3A formed in the retainer 3 at a time of installing the seal main body 10, and the core metal 20 is clamped by the cylinder block 2 and the retainer 3. The lip portion 40 is constituted by the fixed portion 41 coupled to the fixed sealing portion 30 and adhering in such a manner as to cover the inner diameter side end portion of the second flange portion 23 of the core metal 20, and the seal lip 46 extending to the crank chamber side from the fixed portion 41, and a garter spring 47 applying tension force in a radial direction is attached to an outer diameter side of the seal lip 46.

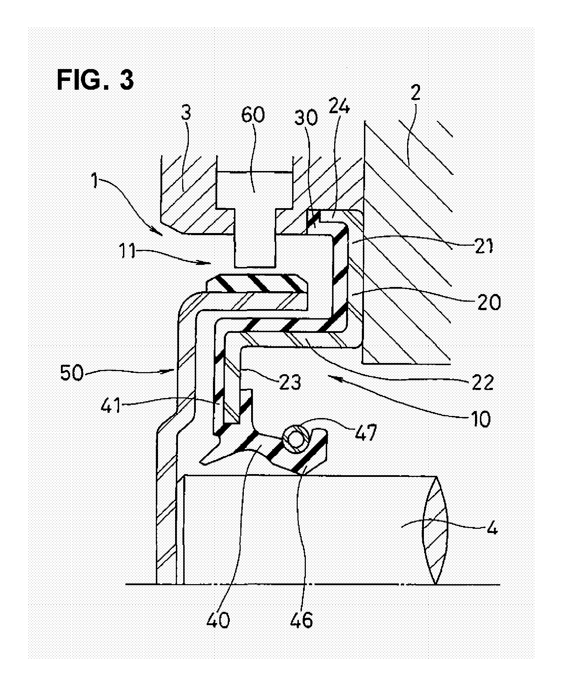

Fig. 3 is a cross sectional view of a hermetically sealing device with a magnetic encoder device in accordance with a third embodiment of the present invention, and a description will be given of different points from the second embodiment.

In the hermetically sealing device 1 with the magnetic encoder device in accordance with the third embodiment, a second cylinder portion 24 extending horizontally to the atmospheric air side from the outer peripheral side endportion is formed in the first flange portion 21 of the core metal 20 of the seal main body 10, and an atmospheric air side end surface and an inner peripheral side surface of the second cylinder portion 24 are covered by a fixed sealing portion 30. The second cylinder portion 24 and the first flange portion 21 adhered to the fixed sealing portion 30 are inserted into the concave portion 3A formed in the retainer 3, at a time of installing the seal main body 10, and the outer peripheral side surface of the second cylinder portion 24 of the core metal 20 is fitted to the inner peripheral surface of the concave portion 3A, and the core metal 20 is clamped by the cylinder block 2 and the retainer 3.

## Claims

1. A hermetically sealing device with a magnetic encoder device comprising:
a magnetic sensor (60) installed to a stationary side member (3) assembled in a housing (2);
a magnetic encoder (50) provided with a holder (51), which is installed in such a manner as to integrally rotate with a rotating shaft (4) passing through along an inner peripheries of said housing (2) and the stationary side member (3), and an encoder main body (56) which is magnetized at a predetermined pitch in a circumferential direction, faces to said magnetic sensor (60) in a radial direction and is connected to a cylinder portion (52) of said holder (51); and
a seal main body (10) provided with a core metal (20), in which a cylinder portion (22) extending in an axial direction from a flange portion (21) clamped between said housing (2) and said stationary side member (3) is close to the cylinder portion (52) of said holder (51), and a lip portion (40) slidably sealing the circumferential surface of said rotating shaft (4).
